Europäisches Patentamt

European Patent Office

Office européen des brevets

(19)

(11) Veröffentlichungsnummer: **0 203 331**
**A1**

# (12) EUROPÄISCHE PATENTANMELDUNG

(21) Anmeldenummer: **86104978.1**

(22) Anmeldetag: **11.04.86**

(51) Int. Cl.⁴: **G 01 F 1/26**

(30) Priorität: **16.04.85 DE 3513543**

(43) Veröffentlichungstag der Anmeldung: **03.12.86**
**Patentblatt 86/49**

(84) Benannte Vertragsstaaten: **AT BE CH DE FR GB IT LI NL SE**

(71) Anmelder: **Hydrotechnik GmbH, Holzheimer Strasse 94-96, D-6250 Limburg 1 (DE)**

(72) Erfinder: **Rosteck, Friedrich W., Bergstrasse 21, D-6239 Eppstein (DE)**

(74) Vertreter: **Linser, Heinz et al, Patentanwälte Heinz Linser Dipl. Ing. Eckhardt Eyer Robert-Bosch-Strasse 12a Postfach 10 22 10, D-6072 Dreieich (DE)**

(54) **Klappendurchflussmesser.**

(57) Die Erfindung betrifft einen Klappendurchflußmesser mit einer federbelasteten, in einer Durchflußkammer zentrisch angeordneten, beidseitig von dem zu messenden Fluid anströmbaren, auf einer Drehachse (1) gelagerten Klappe (2), wobei die Drehachse (1) der Klappe (2) über einen Kurbelarm (5) eine Kurbelstange (6) mit einem Ende einer unter Vorspannung stehenden Druckfeder (8) gelenkig verbunden ist. Das andere Ende der Druckfeder (8) ist an einem Stift (10) angelenkt, welcher in einem mit dem Gehäuseteil (3) justierbar befestigten Lagerteil (11) starr gelagert ist. Die Druckfeder (8) ist zwischen zwei Federtellern (9.1, 9.2) gelagert, und jeder Teller ist über Kugel- oder Wälzlager (7.1, 7.2) lösbar gehalten, wobei das eine Kugel- oder Wälzlager (7.1) mit der Kurbelstange (6) und das andere Kugel- oder Wälzlager (7.2) mit dem im Lagerteil (11) gelagerten Stift (10) verbunden ist. Das den Stift (10) aufnehmende Lagerteil (11) ist mit Hilfe von Schrauben (12) an dem Gehäuseteil (3) befestigt, deren Durchmesser kleiner als die Durchgangsbohrungen für die Schrauben (12) im Lagerteil (11) ist, derart, daß eine Lageveränderung des Lagerteils (11) zur Justierung des Fußpunktes der Druckfeder (8) und der Nullstellung der Klappe (2) gegeben ist.

BESCHREIBUNG:

Die Erfindung betrifft einen Klappendurchflußmesser mit einer federbelasteten, in einer Durchflußkammer zentrisch angeordneten, beidseitig von dem zu messenden Fluid anströmbaren, auf einer Drehachse gelagerten Klappe.

Bei einem Klappendurchflußmesser handelt es sich um ein Gerät zur Messung des Durchflusses eines Fluids durch eine Meßkammer nach dem Widerstandsverfahren. Eine gewichts- oder federbelastete, bei dem Durchfluß Null senkrecht zur Rohrachse hängende, schwenkbare Klappe wird durch die auf die Klappe gerichtete Strömung aus ihrer Ruhelage ausgelenkt. Die Größe des Ausschlages bzw. der Verstellwinkel der Klappe sind ein Maß für den Durchfluß des Fluids in der Dimension Masse/Zeiteinheit. Das Kräftegleichgewicht der Klappe wird beim Meßvorgang durch den auf die Klappe wirkenden Differenzdruck, multipliziert mit ihrer wirksamen Fläche und einem in der Regel durch eine Feder erzeugten Gegendrehmoment erreicht.

Der Differenzdruck entsteht beim Durchströmen des Fluids durch einen durch die Ablenkung der Klappe entstehenden Spalt zwischen dem radialen Ende der Klappe und dem Meßgehäuse der Strömungskammer. Bezogen auf die Nullstellung der Klappe ist die Strömungskammer symmetrisch ausgebildet, so daß die Klappe von beiden Seiten angeströmt werden kann.

Derartige Klappendurchflußmesser sind an sich bekannt. Ihr Einbauraum ist jedoch relativ groß und bei einer axialen Anordnung einer Zug- oder Torsionsfeder zur Erzeugung eines Gegendrehmomentes treten elastische Hysteresiserscheinungen auf, so daß die Meßgenauigkeit dadurch negativ beeinflußt wird.

So wird beispielsweise nach der DE-PS 205 791 zwischen dem Prallflügel und dem Anzeiger eine Spiralfeder verwendet, welche nach beiden Seiten unterschiedliche Rückstellkräfte aufweist, so daß die Messung nur in einer Strömungsrichtung erfolgen kann.

Die Steilheit des Drehmomentes ist nicht veränderbar, so daß die gemäß der vorliegenden Erfindung geforderte Meßgenauigkeit nicht erreicht wird.

Durch die elastischen Hysteresiserscheinungen der Feder ist die Meßgenauigkeit je nach Strömungsrichtung unterschiedlich, so daß sich derartige Geräte nur für eine grobe Durchflußmessung eignen oder nur für eine Durchflußmessung in einer Meßrichtung verwendet werden können.

Aus der DE-PS 976 535 geht ein Strömungsüberwachungsgerät hervor, dessen der ungedrosselten Strömung ausgesetzte Fühlfahne mit Gegengewichten ausgesetzt ist. Diese benötigen für sich und für ihre Bewegungsbahn einen entsprechenden Raumbedarf, so daß diese Geräte sich schon wegen ihrer Größe nicht für den Einbau in fluidische Geräte eignen. Außerdem sind derartige Geräte sehr stark lageabhängig.

Aus der DE-PS 330 230 ist in Durchflußmesser für fluidische Mitte bekannt, welcher zwei Membranen aufweist, die mit dem gesamten Zeiger- und Federsystem bewegt werden müssen. Hierfür sind erhebliche Kräfte erforderlich, so daß die Genauigkeit eines solchen Gerätes ebenfalls sehr begrenzt ist.

Der Erfindung liegt daher die Aufgabe zugrunde einen Klappendurchflußmesser anzugeben, welcher eine höhere Meßgenauigkeit aufweist, dessen elastische Hysteresis vernachlässigbar klein ist, wobei die zur Erzeugung des Drehmomentes erforderliche Federvorrichtung kleine Abmessungen aufweist, so daß das gesamte Meßgerät als Bauteil in fluidische Geräte integriert werden kann.

Der Erfindung liegt die weitere Aufgabe zugrunde ein nach beiden Strömungsrichtungen gleiches Drehmoment erzeugen zu können, so daß die Meßgenauigkeit in beiden Meß- bzw. Strömungsrichtungen gleich genau ist.

Ferner soll die Steilheit des Drehmomentes, welche vom Klappenwinkel abhängig ist, bei möglichen Abweichungen der Federkennlinie einstellbar bzw. justierbar sein.

Die Lösung dieser Aufgaben besteht gemäß der Erfindung darin, daß bei dem eingangs genannten Klappendurchflußmesser die Drehachse der Klappe über einen Kurbelarm und einer Kurbelstange mit einem Ende einer unter Vorspannung stehenden Druck- oder Zugfeder gelenkig verbunden ist und die Druck- oder Zugfeder zwischen zwei Federtellern gelagert ist und jeder Teller über Kugel- oder Wälzlager lösbar gehalten ist, wobei das eine Kugel- oder Wälzlager mit der Kurbelstange und das andere Kugel- oder Wälzlager mit einem Stift verbunden ist, welcher in einem mit dem Gehäuseteil justierbar befestigten Lagerteil starr gelagert ist.

In Weiterbildung der Erfindung ist das den Stift aufweisende Lagerteil mit Hilfe von Schrauben mit dem Gehäuseteil befestigt, wobei deren Durchmesser kleiner als die Durchgangsbohrungen für die Schrauben im Lagerteil ist, derart, daß eine Lageveränderung zur Justierung des Fußpunktes der Feder und der Nullstellung der Klappe gegeben sind.

Nach der Erfindung sind die Kurbelstange und der Kurbelarm zur Druckfeder derartig angeordnet, daß die Vorspannung der Feder die Klappe in ihrer Nullstellung in einem stabilen Gleichgewicht hält.

Die Druckfeder ist in vorteilhafter Weise als Spiralfeder ausgebildet.

In vorteilhafter Weise ist der Kurbelarm von der Drehachse, welche an ihrem Ende eine Abflachung aufweist, mittels einer Feststellschraube lösbar befestigt. Durch diese Maßnahme lassen sich der Kurbelarm und auch die Druckfeder leicht austauschen. Dies ist nicht nur für Reparaturzwecke von Vorteil sondern auch für Veränderungen des Meßbereiches.

0203331

HY 8357

Um auch den Drehwiderstand der Drehachse möglichst gering zu halten, ist die Drehachse der Klappe kugel- oder wälzgelagert.

Die Erfindung wird anhand der Figuren näher erläutert.

Hierbei zeigen:

FIGUR 1    einen Längsschnitt durch einen Klappendurchflußmesser nach der Erfindung, in schematischer Darstellung;

FIGUR 2    einen Schnitt A-A nach Figur 1;

FIGUR 3    einen Schnitt B-B nach Figur 1, und

FIGUR 4    eine Kurve, welche den Verlauf des Drehmoments in Abhängigkeit vom Klappenausschlag alpha in beiden Richtungen wiedergibt.

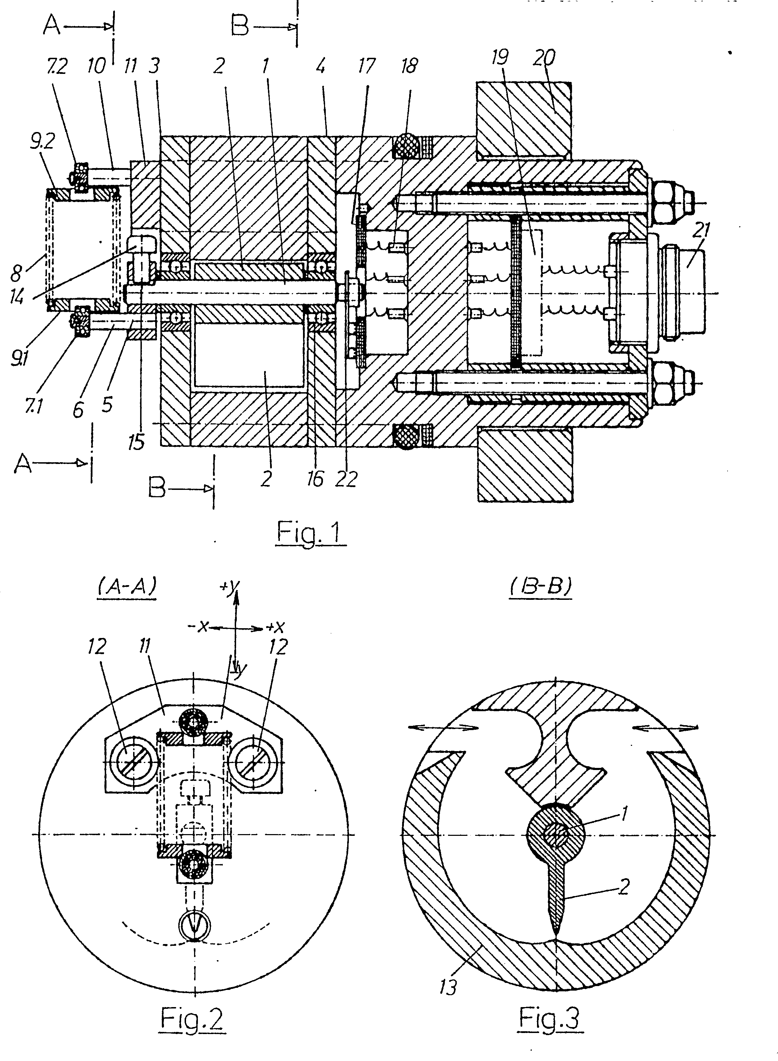

Die Figur 1 zeigt den Klappendurchflußmesser im Längsschnitt. Die Klappe 2 ist mit einer Drehachse 1 verbunden, welche zur Verringerung ihrer Reibung kugel- oder wälzgelagert 15,16 ist. Die Drehachse 1 der Klappe 2 ist über einen Kurbelarm 5 und eine Kurbelstange 6 mit einem Ende einer unter Vorspannung stehenden Druckfeder 8 gelenkig verbunden. Das andere Ende der Druckfeder 8 ist an einem Stift 10 angelenkt, welcher in einem mit dem Gehäuseteil 3 justierbar befestigten Lagerteil 11 starr gelagert ist. Der Kurbelarm 5 ist von der Drehachse 1, welche an ihrem Ende eine Abflachung aufweist, mittels einer Feststellschraube 14 lösbar befestigt. Hierdurch ist die Möglichkeit gegeben, den Kurbelarm 5 in einfacher Weise auszutauschen. Damit läßt sich ein Kurbelarm mit einer anderen Länge einsetzen, welcher im Zusammenwirken mit einer angepaßten Feder einen veränderten Meßbereich ergibt.

Die Druckfeder 8 ist zwischen zwei Federtellern 9.1, 9.2 gelagert und jeder Teller ist über Kugel- oder Wälzlager 7.1, 7.2 lösbar gehalten, wobei das eine Kugel- oder Wälzlager 7.1 mit der Kurbelstange und das andere Kugel- oder Wälzlager 7.2 mit dem im Lagerteil 11 gelagerten Stift 10 verbunden ist.

Bei der Drehung der Drehachse 1 entsprechend einem Meßausschlag der Klappe 1 schwenkt die Kurbelstange 6 um die Drehachse 1 mit einer Länge entsprechend der Länge des Kurbelarmes 5 aus und um diese Größe führt die Achse der Druckfeder 8 Ausschläge nach beiden Seiten, je nach Meßrichtung, aus. Die Kugel- oder Wälzlager 7.1 und 7.2 sorgen dafür, daß hierbei eine möglichst geringe Reibung auftritt.

Das den Stift 10 aufnehmende Lagerteil 11 ist mit Hilfe von Schrauben 12 mit dem Gehäuseteil 3 befestigt, deren Durchmesser kleiner als die Durchgangsbohrungen für die Schrauben 12 im Lagerteil 11 ist. Hierdurch wird bewirkt, daß eine Lageveränderung des Lagerteils 11 zur Justierung des Fußpunktes der Druckfeder 8 und der Nullstellung der Klappe 2 ermöglicht wird. Wie aus Figur 2 ersichtlich ist, kann mit einer Verschiebung des Lagerteils 11 in die X-Richtung die Nullstellung der Kurbel 5 und damit der Klappe 1 eingestellt werden.

Auch bei nicht übereinstimmender Mitte von der Kurbel 5 und der Klappe 2, beispielsweise durch Dejustierungen oder dergleichen, läßt sich die Klappenstellung zum Profilring 13 ausrichten.

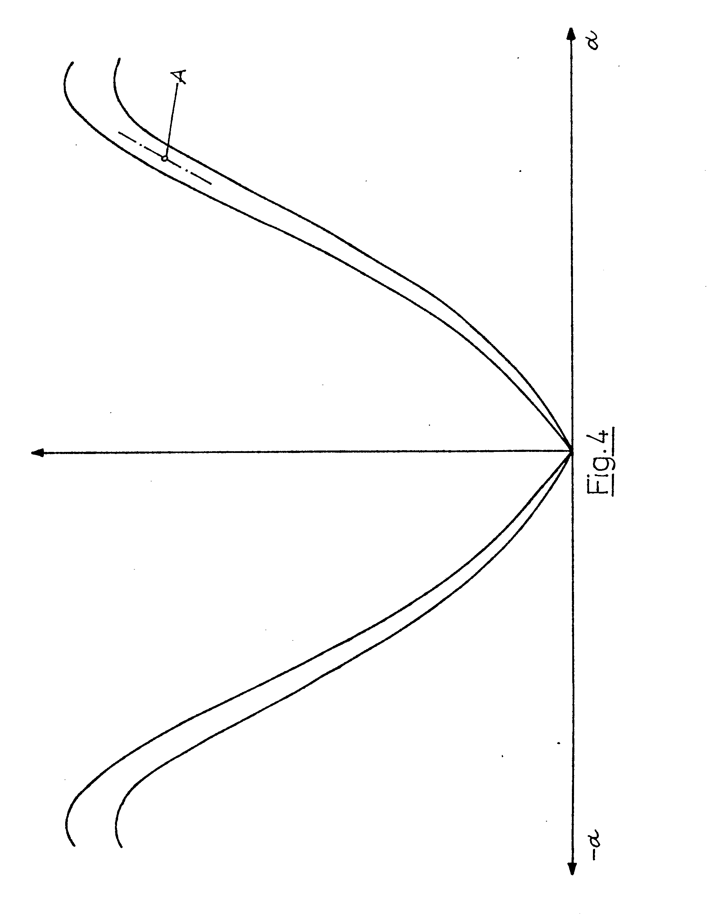

Eine Verschiebung des Lagerteils 11 in die Y-Richtung ermöglich die Einstellung des Drehmomentenverlaufes in den Grenzen, welche in Figur 4 durch die Doppelkurven dargestellt sind. Damit ist eine sehr genaue Einstellung des Drehmomentenverlaufes möglich, beispielsweise durch den Punkt A in Figur 4. Auf diese Weise können Fertigungsungenauigkeiten, beispielsweise am Kurbelradius oder der Feder 8 in einfacher Weise ausgeglichen werden.

0203331

HY 8357

Die Kurbelstange 6 und der Kurbelarm 5 sind zur Druckfeder 8 derartig angeordnet, daß die Vorspannung der Druckfeder 8 die Klappe 2 in ihrer Nullstellung in einem stabilen Gleichgewicht hält. Damit läßt sich die Druckfeder 8 mit einer Vorspannung in Nullstellung der Klappe 1 einbauen, wodurch ein günstiger Bereich der Federkennlinie verwendet werden kann. Dies wiederum gestattet, daß die elastische Hysteresisfläche der verwendeten Feder zu Null reduziert werden kann.

Das dem Kurbelarm 5 gegenüberliegende Ende der Drehachse 1 ist als Potentiometerarm 22 ausgebildet, so daß die Stellung der Klappe 1 sich unmittelbar in elektrische Größen umsetzen läßt.

Die elektrischen Anschlüsse 18 des Potentiometers 17 führen zu einem elektronischen Verstärker 19, dessen Ausgang mit einem Anschlußstecker 21 verbunden ist.

Zur Befestigung des Klappendurchflußmessers sind am Gehäuse Befestigungsflansche 20 vorgesehen.

0203331

HY 8357

PATENTANSPRÜCHE

1. Klappendurchflußmesser mit einer federbelasteten, in einer Durchflußkammer zentrisch oder exzentrisch angeordneten, beidseitig von dem zu messenden Fluid anströmbaren, auf einer Drehachse gelagerten Klappe, dadurch gekennzeichnet, daß die Drehachse (1) der Klappe (2) über einen Kurbelarm (5) und einer Kurbelstange (6) mit einem Ende einer unter Vorspannung stehenden Druck- oder Zugfeder (8) gelenkig verbunden ist und daß die Druck- oder Zugfeder (8) zwischen zwei Federtellern (9.1,9.2) gelagert ist und jeder Teller über Kugel- oder Wälzlager (7.1,7.2) lösbar gehalten ist, wobei das eine Kugel- oder Wälzlager (7.1) mit der Kurbelstange (6) und das andere Kugel- oder Wälzlager (7.2) mit dem Stift (10) verbunden ist, welcher in einem mit dem Gehäuseteil (3) justierbar befestigten Lagerteil (11) starr gelagert ist.

2. Klappendurchflußmesser nach Anspruch 1, dadurch gekennzeichnet, daß das den Stift (10) aufnehmende Lagerteil (11) mit Hilfe von Schrauben (12) mit dem Gehäuseteil (3) befestigt ist, deren Durchmesser kleiner als die Durchgangsbohrungen für die Schrauben (12) im Lagerteil (11) ist, derart, daß eine Lageveränderung des Lagerteils (11) zur Justierung des Fußpunktes der Druckfeder (8) und der Nullstellung der Klappe (2) gegeben ist.

3. Klappendurchflußmesser nach Anspruch 1 oder 2, dadurch gekennzeichnet, daß die Kurbelstange (6) und der Kurbelarm (5) zur Druck- oder Zugfeder (8) derartig angeordnet sind, daß die Vorspannung der Druck- oder Zugfeder (8) die Klappe (2) in ihrer Nullstellung in einem stabilen Gleichgewicht hält.

4. Klappendurchflußmesser nach Anspruch 1 oder einem der voranstehenden, dadurch gekennzeichnet, daß die Druck- oder Zugfeder (8) als gewundene Zylinderfeder ausgebildet ist.

HY 8357

5. Klappendurchflußmesser nach Anspruch 1 oder einem der voranstehenden, dadurch gekennzeichnet, daß der Kurbelarm (5) von der Drehachse (1), welche an ihrem Ende eine Abflachung aufweist, mittels einer Feststellschraube (14) lösbar befestigt ist.

6. Klappendurchflußmesser nach Anspruch 1 oder einem der voranstehenden, dadurch gekennzeichnet, daß das dem Kurbelarm (5) gegenüberliegende Ende der Drehachse (1) als Drehwinkelgeberarm oder Zeigerwelle ausgebildet ist.

7. Klappendurchflußmesser nach Anspruch 1 oder einem der vorstehenden, dadurch gekennzeichnet, daß die Drehachse (1) der Klappe (2) wälzgelagert, vorzugsweise kugelgelagert ist.

1/2                    0203331

**Fig. 1**

*(A-A)*

**Fig. 2**

*(B-B)*

**Fig. 3**

Fig. 4

## EINSCHLÄGIGE DOKUMENTE

EP 86104978.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DD - A - 107 137 (ULBRICHT) <br> * Fig. 1,2 * <br> -- | 1,3,4 | G 01 F 1/26 |
| D,A | DE - C - 205 791 (ATKINSON) <br> * Gesamt * <br> -- | 1,6 | |
| A | DE - A1 - 3 326 742 (EMHART INDU-STRIES) <br> * Zusammenfassung; Fig. * <br> ---- | 1 | |

| | RECHERCHIERTE SACHGEBIETE (Int. Cl.4) |
|---|---|
| | G 01 F 1/00 |

Der vorliegende Recherchenbericht wurde für alle Patentansprüche erstellt.

| Recherchenort | Abschlußdatum der Recherche | Prüfer |
|---|---|---|
| WIEN | 16-07-1986 | BURGHARDT |